# EUROPEAN PATENT APPLICATION

(11) **EP 4 746 543 A1**
(43) Date of publication of application: **20.05.2026**
(21) Application number: 23944682.6
(22) Date of filing: 12.07.2023
(51) Int. Cl.: H04W 64/00

(54) **METHOD FOR COMMUNICATION, AND TERMINAL DEVICE AND NETWORK DEVICE**

(71) Applicant: Quectel Wireless Solutions Co., Ltd., Shanghai 201601 (CN)
(72) Inventor: LYU, Ling, Shanghai, 201601 (CN); ZHAO, Zheng, Shanghai, 201601 (CN); YANG, Zhongzhi, Shanghai, 201601 (CN)
(74) Representative: Fish & Richardson P.C.
(86) International application number: PCT/CN2023/107035
(87) International publication number: WO 2025/010662

(57) **Abstract**

A method for communication, a terminal device, and a network device are provided. The method includes measuring, by a terminal device, a GNSS in a time division manner to obtain first position information of the terminal device. A time for measuring the GNSS and/or a time for pausing a GNSS measurement is determined based on a DRX cycle. In relevant technologies, prior to obtaining position information through the GNSS measurement, if a DRX activation interval exists, the terminal device is required to measure GNSS in the DRX activation interval and thus cannot transmit and receive data. The present disclosure allows for the GNSS measurement to be conducted in the time division manner, and the time for measuring GNSS and/or pausing the GNSS measurement may be determined based on the DRX cycle. Therefore, based on the present disclosure, the GNSS measurement can be paused according to the DRX cycle before the first position information of the terminal device is obtained, allowing data transmission and reception during the pause in the GNSS measurement, thereby improving the efficiency of data transmission and reception.

## Description

### TECHNICAL FIELD

The present disclosure relates to the field of communication technology, and more specifically to a method for communication, a terminal device, and a network device.

### BACKGROUND

In some communication systems, terminal devices need to obtain their geographical positions to achieve normal communication. For example, terminal devices may acquire their geographical positions by measuring a global navigation satellite system (GNSS). Some terminal devices are limited by their capabilities and cannot simultaneously perform measurements for geographical positions and data transmission/reception. Therefore, in relevant technologies, if GNSS measurements are required, the terminal devices cannot perform data transmission/reception before obtaining position information of the terminal devices.

### SUMMARY

The present disclosure provides a method for communication, a terminal device, and a network device. Various aspects related to the present disclosure are described below.

According to a first aspect, a method for communication is provided, including: measuring, by a terminal device, a global navigation satellite system, GNSS, in a time division manner to obtain first position information of the terminal device; where one or both of a time for measuring the GNSS and a time for pausing a GNSS measurement is determined based on a discontinuous reception, DRX, cycle.

According to a second aspect, a method for communication is provided, including: receiving, by a network device, first indication information sent by a terminal device; where the first indication information is used to indicate: whether the terminal device supports measuring a global navigation satellite system, GNSS, in a time division manner to obtain first position information of the terminal device, and one or both of a time for measuring the GNSS and a time for pausing a GNSS measurement is determined based on a discontinuous reception, DRX, cycle.

According to a third aspect, a terminal device is provided, including: a measurement unit, configured to measure a global navigation satellite system, GNSS, in a time division manner to obtain first position information of the terminal device; where one or both of a time for measuring the GNSS and a time for pausing a GNSS measurement is determined based on a discontinuous reception, DRX, cycle.

According to a fourth aspect, a network device is provided, including: a receiving unit, configured to receive first indication information sent by a terminal device; where the first indication information is used to indicate: whether the terminal device supports measuring a global navigation satellite system, GNSS, in a time division manner to obtain first position information of the terminal device, and one or both of a time for measuring the GNSS and a time for pausing a GNSS measurement is determined based on a discontinuous reception, DRX, cycle.

According to a fifth aspect, a terminal device is provided, including a memory and a processor, where the memory is configured to store one or more computer programs, and the processor is configured to invoke the computer programs in the memory to cause the terminal to perform some or all of the operations in the method according to the first aspect.

According to a sixth aspect, a network device is provided, including a processor, a memory, and a transceiver, where the memory is configured to store one or more computer programs, and the processor is configured to invoke the computer programs in the memory to cause the network device to perform some or all of the operations in the method according to the second aspect.

According to a seventh aspect, a communication system is provided, including the above terminal device and/or network device. In another possible design, the system further includes other devices that interact with the terminal device or network device in the solutions provided in the embodiments of the present disclosure.

According to an eighth aspect, a computer-readable storage medium is provided, storing a computer program, where the computer program causes the terminal device and/or network device to perform some or all of the operations in the methods according to various aspects.

According to a ninth aspect, a computer program product is provided, including a non-transitory computer-readable storage medium that stores a computer program, where the computer program is executable to cause the terminal device and/or network device to perform some or all of the operations in the methods according to various aspects. In some implementations, the computer program product may be a software installation package.

According to a tenth aspect, a chip is provided, including a memory and a processor, where the processor is configured to invoke a computer program from the memory to perform some or all of the operations in the methods according to various aspects.

In relevant technologies, prior to obtaining position information through the GNSS measurement, if a DRX activation interval exists, the terminal device is required to measure GNSS in the DRX activation interval and thus cannot transmit and receive data. The present disclosure allows for the GNSS measurement to be conducted in the time division manner, and the time for measuring GNSS and/or pausing the GNSS measurement may be determined based on the DRX cycle. Therefore, based on the present disclosure, the GNSS measurement can be paused according to the DRX cycle before the first position information of the terminal device is obtained, allowing data transmission and reception during the pause in the GNSS measurement, thereby improving the efficiency of data transmission and reception. Additionally, the terminal device may perform the GNSS measurement before the second position information obtained from the historical GNSS measurement becomes invalid, thus avoiding the situation where the terminal device enters the idle state due to the invalid GNSS measurement result and needs to re-establish a radio resource control (RRC) connection, thereby reducing the signaling interaction required for establishing the RRC connection. Furthermore, the terminal device may perform the GNSS measurement based on the DRX cycle, which reduces the impact of the GNSS measurement on data transmission for the terminal device in a connected state.

### BRIEF DESCRIPTION OF THE DRAWINGS

FIG. 1 is a wireless communication system applied in an embodiment of the present disclosure.
FIG. 2 is a schematic diagram of a DRX cycle.
FIG. 3 is an example diagram of a method for a terminal device to perform data transmission/reception and position measurement.
FIG. 4 is another example diagram of a method for a terminal device to perform data transmission/reception and position measurement.
FIG. 5 is a schematic flowchart of a method for communication according to an embodiment of the present disclosure.
FIG. 6A shows a process of measuring a GNSS by a terminal device in a time division manner.
FIG. 6B shows another process of measuring a GNSS by a terminal device in a time division manner.
FIG. 7 is an example diagram of GNSS measurement start times in different manners according to an embodiment of the present disclosure.
FIG. 8 is a schematic structural diagram of a terminal device according to an embodiment of the present disclosure.
FIG. 9 is a schematic structural diagram of a network device according to an embodiment of the present disclosure.
FIG. 10 is a schematic structural diagram of an apparatus for communication according to an embodiment of the present disclosure.

### DETAILED DESCRIPTION OF THE EMBODIMENTS

The following describes the technical solution in the present disclosure in combination with the attached drawings.

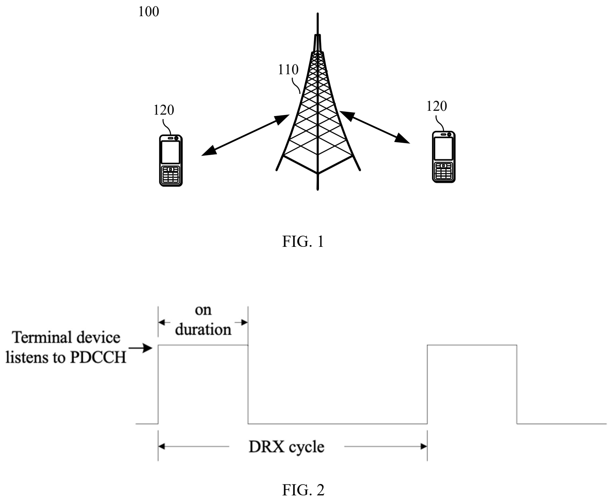

FIG. 1 is a wireless communication system 100 applied in embodiments of the present disclosure. The wireless communication system 100 includes a communication device. The communication device includes a network device 110 and a terminal device 120, and the network device 110 may be a device that communicates with the terminal device 120.

FIG. 1 exemplarily shows a network device and two terminal devices. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device. The network device may also include an access network device. The access network device provides communication coverage for a particular geographic area and communicates with the terminal device 120 located within the coverage area. The access network device may also be referred to as a radio access network device, a base station, etc. The access network device in the embodiments of the present disclosure may refer to a radio access network (RAN) node (or device) that accesses the terminal device to a wireless network. The access network device may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology and specific device form adopted by the access network device are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

The communication device involved in the wireless communication system may include not only the access network device and the terminal device but also a core network element. The core network element may be implemented through a device, meaning that the core network element is a core network device. It should be understood that the core network device may also be a network device.

The core network element in the embodiments of the present disclosure may include an element that processes and forwards signaling and data for users. For example, the core network device may include a core access and mobility management function (AMF), a session management function (SMF), a user plane gateway, a location management function (LMF), and other core network devices. Among them, the user plane gateway may be a server that has functions for managing mobility, routing, and forwarding of user plane data, typically located on a network side, such as a serving gateway (SGW), a packet data network gateway (PGW), or a user plane function (UPF), etc. Of course, the core network may also include other elements, which are not listed here.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

A non-terrestrial network (NTN) provides communication services to users via non-terrestrial means, i.e., communicating with the terminal device via the network device such as a satellite, an unmanned aircraft system (UAS) platform, etc.

For terrestrial network communication, land communication cannot deploy communication devices in scenarios such as oceans, mountains, and deserts. Alternatively, considering the cost of deploying and operating communication devices, land communication typically does not cover sparsely populated areas. Compared to terrestrial network (TN) communication, NTN offers many advantages. Firstly, NTN communication is not limited by the geographical location of users. As for the NTN communication network, there are no geographical restrictions. Theoretically, satellites orbit the Earth, therefore every corner of the Earth can be covered by satellite communication. Furthermore, the area covered by NTN communication device is far larger than that covered by terrestrial communication device.

In some communication systems, the network device may configure a discontinuous reception (DRX) function for the terminal device. When the DRX function is configured for the terminal device, the terminal device may listen to a physical downlink control channel (PDCCH) in a non-continuous manner, achieving the goal of power saving for the terminal device.

If the terminal device is configured with DRX, the terminal device may refrain from listening to the PDCCH during a DRX inactive interval, i.e., entering a sleep state in which data cannot be transmitted and received, thus realizing power saving for the terminal device. When it is required to listen to the PDCCH, the terminal device may be awakened from the sleep state to enter a DRX active interval for data transmission and reception.

It should be noted that in some embodiments, the DRX active interval may also be referred to as a DRX on period or DRX wake-up period. The DRX inactive interval may also be referred to as a DRX off period or DRX sleep period.

A DRX-onDuration Timer is taken as an example to describe the DRX active interval. FIG. 2 illustrates an example of an operation process of the DRX-onDuration Timer. As shown in FIG. 2, within a DRX cycle, when the DRX-onDuration Timer is running, i.e., during an on duration shown in FIG. 2, the terminal device may listen to the PDCCH, meaning that the terminal device is in the DRX active interval. After the on duration ends, the terminal device cannot listen to the PDCCH, meaning that the terminal device is in the DRX inactive interval.

During the communication process, the terminal device needs to obtain its geographical position. For example, the terminal device may determine its position information by measuring the GNSS. The GNSS may include one or more of: a Beidou navigation satellite system (BDS), a global positioning system (GPS), a GLONASS navigation satellite system, and a GALILEO navigation satellite system.

The position information of the terminal device may be used for data transmission and reception in various scenarios. Taking the NTN system as an example, for uplink data transmission, the terminal device may obtain its geographical position and then infer a physical position of the satellite based on system information broadcast (SIB), thereby calculating a transmission delay between the terminal device and the satellite (UE-SAT), which may further be used to compute an uplink transmission time advance. For downlink data transmission, based on the geographical position reported by the terminal device, the network device may better align the center of the beam with the terminal device, thus improving downlink transmission efficiency.

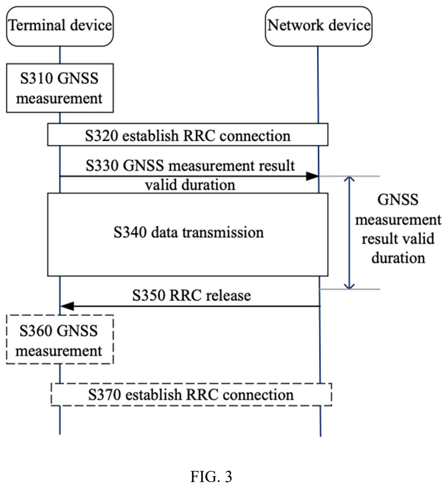

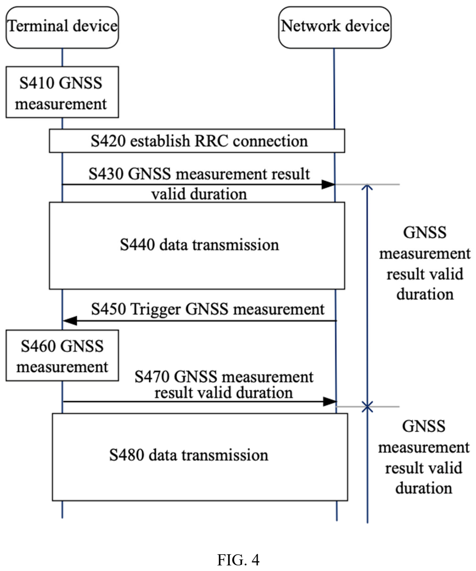

Some terminal devices (such as narrow band internet of things (NB-IoT) terminals) are unable to simultaneously measure geographical position and perform data transmission and reception due to their capability limitations. In such cases, the two operations may be conducted only in a time division manner. Additionally, since the terminal device may move, the measured position information is only valid for a limited period. A valid duration of the position information is related to factors such as a movement speed of the terminal device and its geographical position. Therefore, it is required to re-measure the position information at regular intervals. The position measurement process for such terminal devices is explained in conjunction with FIG. 3 and FIG. 4.

FIG. 3 is an example flowchart for a terminal device measuring its position. The method shown in FIG. 3 may include operations S310 to S350.

At operation S310, the terminal device performs the GNSS measurement to obtain a GNSS measurement result. The GNSS measurement result refers to position information of the terminal device determined based on the GNSS measurement.

It should be noted that the terminal device performs the GNSS measurement in a non-connected state.

After determining the position information of the terminal device, the terminal device and the network device may proceed to operation S320.

At operation S320, the terminal device establishes an RRC connection with the network device.

At operation S330, the terminal device sends a valid duration of the GNSS measurement result to the network device.

Optionally, at operation S330, the terminal device may further send the GNSS measurement result to the network device.

After the network device receives the valid duration of the GNSS measurement result, it may consider that the terminal device has successfully performed the GNSS measurement and start a GNSS valid timer based on the valid duration. In a case that the GNSS valid timer has not expired, the network device may consider that "the terminal device knows its position information," allowing the network device and terminal device to proceed to operation S340.

At operation S340, data transmission and reception occur between the network device and the terminal device.

At operation S350, after the GNSS valid timer expires, the network device releases the RRC connection, and the terminal device returns to an idle state.

If there is a need for further data transmission between the terminal device and the network device, operations S310 to S350 may be repeated. Continuing with FIG. 3 as an example, the terminal device may perform the GNSS measurement again (e.g., operation S360) and initiate the RRC connection again (e.g., operation S370).

In the flow shown in FIG. 3, the terminal device may only transmit and receive data within the GNSS valid duration. Each time the GNSS valid duration expires, an RRC connection should be initiated again, resulting in a significant signaling load. To address this, related technologies (e.g., R18) propose a process of "triggering the GNSS measurement again before the GNSS valid duration expires." The following describes this process with reference to FIG. 4. The method shown in FIG. 4 may include operations S410 to S480.

At operation S410, the terminal device performs the GNSS measurement.

At operation S420, the terminal device establishes an RRC connection with the network device.

At operation S430, the terminal device sends a valid duration of the GNSS measurement result to the network device.

After the network device receives the valid duration of the GNSS measurement result, it may start a GNSS valid timer based on the valid duration.

Optionally, at operation S430, the terminal device may further send position information of the terminal device determined based on the GNSS measurement to the network device.

At operation S440, data transmission and reception occur between the terminal device and the network device.

At operation S450, before the GNSS valid timer expires, the network device notifies the terminal device to perform the GNSS measurement again.

It should be understood that operation S450 is the "re-triggering of the GNSS measurement" initiated by the network device. The "re-triggering of the GNSS measurement" may also be initiated by the terminal device itself, which is not elaborated further in the present disclosure.

At operation S460, the terminal device performs the GNSS measurement.

During a period when the terminal device performs the GNSS measurement again, the terminal device cannot transmit or receive data.

At operation S470, the terminal device reports a new measurement result valid duration to the network device. Optionally, the terminal device may also report a new measurement result.

At operation S480, the terminal device continues to transmit and receive data.

It may be seen that in both the methods shown in FIG. 3 and FIG. 4, if the GNSS measurement is required, the terminal device cannot transmit and receive data until the position information of the terminal device is obtained. For example, the measurement process may include the DRX active interval. However, due to the ongoing measurement, the terminal device cannot transmit and receive data during the DRX active interval, resulting in reduced data transmission efficiency. Additionally, the time required for the terminal device to perform the measurement is often long. For example, measuring GNSS may take 2 to 10 seconds, which may include a plurality of DRX active intervals. Therefore, the process of the terminal device measuring its position has a significant impact on data transmission and reception.

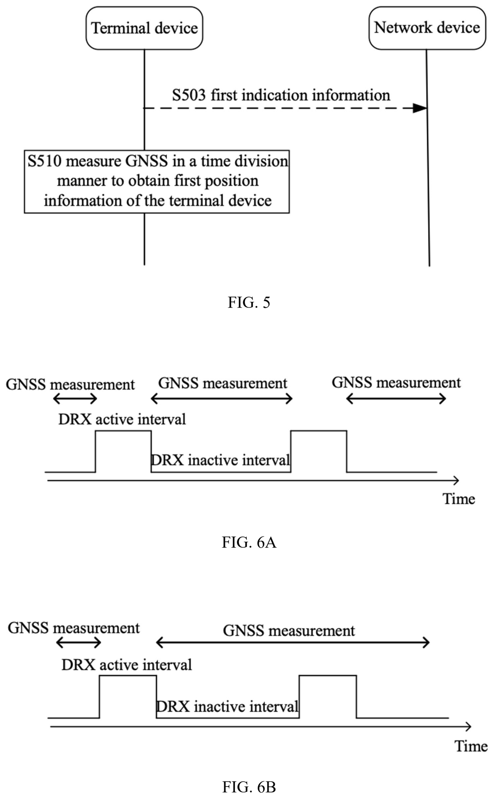

FIG. 5 shows a method for communication provided in an embodiment of the present disclosure to address the above issues. The method shown in FIG. 5 may be executed by the terminal device and may include operation S510.

At operation S510, the terminal device measures the GNSS in a time division manner to obtain first position information of the terminal device.

In some embodiments, operation S510 may include that during the GNSS measurement process, the terminal device may pause the measurement for a period or multiple periods, meaning that the measurement time is not continuous; after the duration for pausing the measurement ends, the terminal device may continue the GNSS measurement process. The terminal device may obtain one piece of position information (i.e., the first position information) based on this GNSS measurement. During the time for pausing the measurement, the terminal device may perform data transmission and reception. In other words, operation S510 may include that during the GNSS measurement process to determine a piece of position information for the terminal device, the terminal device may pause the GNSS measurement and perform data transmission and reception.

By measuring the GNSS in the time division manner, the GNSS measurement may be paused before obtaining the first position information and data transmission and reception may be performed during the duration for pausing the measurement, thereby improving the efficiency of data transmission and reception. Additionally, the longer the GNSS measurement time, the higher the accuracy of the measured position. By measuring GNSS in the time division manner, a total duration of the GNSS measurement may be extended, thus improving the accuracy of the first position information.

It should be noted that if data transmission and reception occur during the time for pausing the GNSS measurement, the data transmission and reception may be based on the position information obtained from a historical GNSS measurement.

It should be noted that the terminal device executing the method shown in FIG. 5 may be a terminal device that cannot perform the GNSS measurement and data transmission and reception simultaneously. For example, the terminal device may be an NB-IoT terminal.

It should be noted that in some embodiments, the time division manner may also be referred to as an intermittent, non-continuous, or discontinuous manner.

In some embodiments, a time for measuring GNSS and/or a time for pausing the GNSS measurement may be determined based on the DRX cycle. As mentioned above, the DRX cycle may include the DRX active interval and the DRX inactive interval. During the DRX active interval, the terminal device may transmit and receive data. During the DRX inactive interval, the terminal device is in the sleep state and cannot perform data transmission and reception with the network device. Based on the present disclosure, the GNSS measurement may be paused according to the DRX cycle before obtaining the first position information of the terminal device, allowing data transmission and reception during the time for pausing the GNSS measurement, thereby improving the efficiency of data transmission and reception. Furthermore, the terminal device performing the GNSS measurement based on the DRX cycle may prevent the terminal device from entering the idle state due to the invalidity of the GNSS measurement result and having to re-establish the RRC connection, thus reducing processes of establishing the RRC connection for the GNSS measurement and, consequently, reducing signaling interactions between the terminal device and the network device.

In some implementations, the time for measuring GNSS belongs to DRX inactive intervals or part of DRX active intervals. In other words, during the DRX inactive intervals or part of the DRX active intervals, the terminal device may perform the GNSS measurement. In some implementations, the time for pausing the GNSS measurement may belong to the DRX active intervals. In other words, during the DRX active interval, the terminal device may not perform the GNSS measurement. It should be noted that during the DRX active interval for measuring GNSS, the terminal device cannot transmit and receive data. The following examples are detailed with reference to FIG. 6A and FIG. 6B.

For example, the time for measuring GNSS may avoid all DRX active intervals. As shown in FIG. 6A, the terminal device may perform the GNSS measurement before each DRX active interval. During the DRX active interval, the terminal device may pause the GNSS measurement. After the DRX active interval ends, the terminal device may continue the GNSS measurement.

For another example, the time for measuring GNSS may avoid part of the DRX active intervals. That is, during some DRX active intervals, the terminal device may pause the GNSS measurement, while during other DRX active intervals, the terminal device may measure the GNSS. As shown in FIG. 6B, during a first DRX active interval, the terminal device pauses the GNSS measurement. During a second DRX active interval, the terminal device measures the GNSS.

According to the DRX cycle, data transmission between the terminal device and the network device may be paused during the DRX inactive interval. The present disclosure may utilize the DRX inactive interval for GNSS measurement and may transmit and receive data during the DRX active interval, thereby efficiently utilizing time periods in which no data is transmitted and received in the DRX cycle for GNSS measurement, thus improving the efficiency of both data transmission and GNSS measurement.

In some embodiments, the method shown in FIG. 5 may further include operation S503. Operation S503 may be executed by both the network device and the terminal device.

At operation S503, the terminal device sends first indication information, and the network device receives the first indication information. The first indication information may be used to indicate whether the terminal device supports measuring the GNSS in a time division manner, i.e., whether it has the capability to measure the GNSS in the time division manner.

In some embodiments, the first indication information may be carried in one or both of: terminal device capability information (UE capability), and application layer capability reporting information. For example, the terminal device may send the first indication information to an application server through the application layer capability reporting information, and the application server may then send the first indication information to the base station.

The present disclosure does not limit the signaling that carries the first indication information. For example, the first indication information may be carried in one or more of: RRC signaling, a media access control control element (MAC CE), an application layer message, etc. As a possible implementation, the terminal device may report the first indication information to the network device via RRC signaling, where the RRC signaling may include terminal device capability information reporting signaling.

A timing for reporting the first indication information may include a process of the terminal device registering with the network and the time after the terminal device establishes the RRC connection with the network device.

In some embodiments, during the process of the terminal device registering with the network, the terminal device may send the first indication information. Optionally, the core network device may store the first indication information, and the access network device may retrieve the first indication information from the core network device. It should be understood that in these embodiments, the terminal device may report the first indication information only once during registration, thereby avoiding subsequent repeated reports of the first indication information by the terminal device, thus saving communication resources.

In some embodiments, in response to the terminal device establishing the RRC connection with the network device, the terminal device may send the first indication information. For example, the terminal device may report the first indication information to the network device each time an RRC connection is established.

Both the terminal device and the network device may determine whether the terminal device measures the GNSS in the time division manner. For example, in a case that the terminal device supports measuring GNSS in the time division manner, the terminal device or the network device may determine whether the terminal device measures GNSS in a time division manner or in a continuous manner. The continuous manner refers to that the terminal device continuously measures GNSS using relevant techniques to obtain first position information, and the terminal device may only transmit and receive data after obtaining the GNSS measurement result. In other words, during the process of measuring GNSS in the continuous manner, the terminal device does not perform data transmission and reception.

It is seen that in the case that the terminal device supports measuring GNSS in the time division manner, the terminal device does not necessarily measure GNSS in the time division manner, it may also measure GNSS in the continuous manner in relevant techniques.

In the case that the terminal device measures GNSS in the time division manner, the network device or the terminal device may further determine which time division manner to use for measuring GNSS. For example, the time division manner may include not measuring GNSS during all DRX active intervals (e.g., as shown in FIG. 6A), or not measuring GNSS during part of the DRX active intervals (e.g., as shown in FIG. 6B).

In the case that the terminal device determines whether to measure GNSS in the time division manner, the terminal device may send second indication information to the network device. The second indication information may be used to indicate whether the terminal device measures GNSS in the time division manner. In other words, the terminal device may indicate its determination result through the second indication information.

In the case that the terminal device measures GNSS in the continuous manner, the terminal device may send the second indication information to the network device before measuring GNSS. In the case of measuring GNSS in the continuous manner, the terminal device cannot transmit and receive data after the GNSS measurement starts. Therefore, the terminal device is required to send the second indication information before the GNSS measurement starts.

In the case that the terminal device measures GNSS in the time division manner, the terminal device may send the second indication information before measuring GNSS or during a gap when GNSS measurement is paused. For example, after the GNSS measurement starts, the terminal device may send the second indication information during a first DRX active interval when GNSS measurement is paused. Alternatively, if the GNSS measurement process includes a plurality of DRX active intervals, the terminal device may send the second indication information during any DRX active interval.

As mentioned above, in some cases, during part of the DRX active intervals, the terminal device may pause GNSS measurement to perform data transmission and reception; and during other DRX active intervals, the terminal device may continue GNSS measurement without performing data transmission and reception. For this situation, the terminal device may send the second indication information before the first DRX active interval in which data cannot be transmitted and received during the GNSS measurement process. Taking the case shown in FIG. 6B as an example, during a second DRX active interval, the terminal device performs the GNSS measurement and cannot transmit and receive data. The terminal device may send the second indication information before the GNSS measurement or during the first DRX active interval. Based on this, the terminal device may inform the network device through the second indication information that the terminal device is unable to transmit and receive data during one or some subsequent DRX active intervals, thus preventing data transmission failures caused by the network device attempting to transmit and receive data during DRX active intervals in which data cannot be transmitted and received.

As mentioned above, the network device may also determine whether the terminal device measures GNSS in the time division manner. In this case, the network device may send second indication information to the terminal device to inform it of the determination result. The content of the second indication information sent by the network device is similar to that of the second indication information sent by the terminal device. Therefore, for the aspects of the second indication information sent by the network device that are not described in detail, reference may be made to the second indication information sent by the terminal device.

In the case where the network device sends the second indication information, a time for sending the second indication information may be earlier than the time for measuring GNSS. In other words, the network device may send the second indication information to the terminal device before the GNSS measurement process, allowing the terminal device to determine how to measure GNSS based on the received second indication information before measuring GNSS, so as to clarifying its behavior during the GNSS measurement process.

In some embodiments, the second indication information may further be used to indicate one or both of: a DRX active interval in which data is unable to be transmitted and received, and a timing for completing the GNSS measurement. For example, in the case where the second indication information is sent from the terminal device to the network device, the second indication information may further be used to indicate one or both of: the DRX active interval in which data is unable to be transmitted and received, and the timing for completing the GNSS measurement. Alternatively, in the case where the second indication information is sent from the network device to the terminal device, the second indication information may further be used to indicate the DRX active interval in which data is unable to be transmitted and received. The present disclosure does not limit the manner for indicating the DRX active interval in which data is unable to be transmitted and received. For example, the DRX active interval in which data is unable to be transmitted and received may be indicated by one or more of: a bitmap, a first cycle, an interval sequence, a first index, etc.

The bitmap may indicate whether each DRX active interval during the GNSS measurement process is capable of data transmission and reception. As an implementation, a first bit in the bitmap may represent whether data is able to be transmitted and received in the first DRX active interval. The first bit may be any bit in the bitmap, and the first DRX active interval may be any DRX active interval during the GNSS measurement process. For example, a value of the first bit being 1 may indicate that data is able to be transmitted and received in the first DRX active interval, while a value of the first bit being 0 may indicate that data is unable to be transmitted and received in the first DRX active interval. For another example, a value of the first bit being 1 may indicate that data is unable to be transmitted and received in the first DRX active interval, while a value of the first bit being 0 may indicate that data is able to be transmitted and received in the first DRX active interval. As an implementation, each bit in the bitmap may represent whether data is able to be transmitted and received in a corresponding DRX active interval. Assuming the bitmap is 01 and 0 indicates that data is unable to be transmitted and received in a corresponding DRX interval, this bitmap may indicate that data is unable to be transmitted and received in the first DRX active interval during the GNSS measurement process, while data is able to be transmitted and received in the second DRX active interval.

In some embodiments, the interval sequence may indicate an interval of adjacent DRX active intervals during which data is unable to be transmitted and received. Taking the interval sequence including {2, 0} as an example, if counting starts from the 1^{st} DRX active interval, data is unable to be transmitted and received in a 4^{th} DRX active interval that is 2 intervals away from the 1^{st} DRX active interval, and data is also unable to be transmitted and received in a 5^{th} DRX active interval that is 0 interval away from the 4^{th} DRX active interval. If counting starts from the 0^{th} DRX active interval, data is unable to be transmitted and received in a 3^{rd} DRX active interval that is 2 intervals away from the 0^{th} DRX active interval, and data is also unable to be transmitted and received in a 4^{th} DRX active interval that is 0 interval away from the 3^{rd} DRX active interval. In some embodiments, the interval sequence may indicate in which subsequent DRX active intervals the data is unable to be transmitted and received. For example, the interval sequence includes {2, 1}, then the data is unable to be transmitted and received in the 2^{nd} DRX active interval, and the data is also unable to be transmitted and received in a 1^{st} DRX active interval after the 2^{nd} DRX active interval (i.e., a 3^{rd} DRX active interval).

The DRX active intervals in which the data is unable to be transmitted and received may occur periodically, meaning the intervals between these DRX active intervals are equal. In this case, the first cycle may be used to indicate a cycle of the DRX active intervals in which the data is unable to be transmitted and received. For example, the first cycle may be 2, then the data is unable to be transmitted and received in a 1^{st} DRX active interval, the data is able to be transmitted and received in a 2^{nd} DRX active interval, the data is unable to be transmitted and received in a 3^{rd} DRX active interval, and so on.

It should be noted that a starting point for counting from which DRX active interval is defined by the protocol or configured by the network device in the case of indicated by the time sequence or the first cycle.

A first index may correspond to an index of the DRX active interval in which the data is unable to be transmitted and received. The first index may belong to an index set. The index set may include a plurality of indices. The plurality of indices may be in one-to-one correspondence with a plurality of DRX active intervals in which the data is unable to be transmitted and received. For example, the index set may include {001, 101}. If the first index is 001, it may indicate that the data is unable to be transmitted and received in the 1^{st} and 2^{nd} DRX active intervals, while the data is able to be transmitted and received in the 3^{rd} DRX active interval. If the first index is 101, it may indicate that the data is unable to be transmitted and received in the 1^{st} to 4^{th} DRX active intervals, while the data is able to be transmitted and received in the 5^{th} DRX active interval. In some embodiments, the timing for completing GNSS measurement (or the time for completing GNSS measurement) may be represented by an absolute time, i.e., represented by one or more of: year, month, day, hour, minute, second, millisecond, or microsecond. For example, the timing for completing GNSS measurement may be represented as July 8, 2023, 21:34:32.23 ms.

In some embodiments, the timing for completing GNSS measurement may be indicated by an identifier of a time unit. The time unit may include one or more of: a frame, a subframe, and a superframe. The identifier, for example, may be a corresponding number, meaning that the identifier of the time unit may include one or more of: a frame number, a subframe number, and a superframe number.

In some embodiments, the timing for completing GNSS measurement may be indicated implicitly. For example, the timing for completing GNSS measurement may be determined by a reception time of a message related to GNSS measurement. Exemplarily, the message related to the completion of GNSS measurement may be used to carry the third indication information (i.e., information indicating the completion of GNSS measurement) described later.

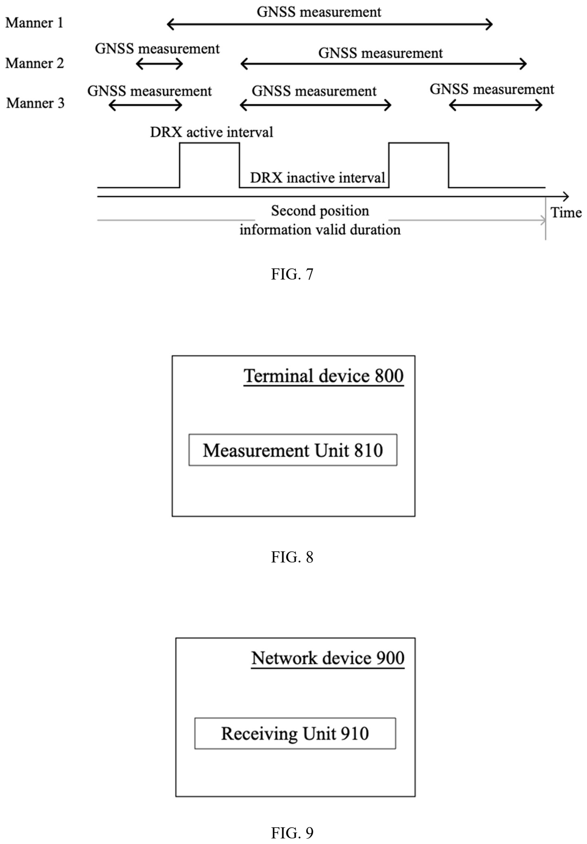

The terminal device may determine a time to start GNSS measurement based on whether GNSS is measured in the time division manner. In the case that the terminal device measures GNSS in the time division manner, the terminal device may pause GNSS measurement, resulting in a longer duration between start and end times of GNSS measurement. Therefore, the terminal device may start measuring GNSS earlier to ensure that the end time of GNSS measurement occurs before the invalidity of the second position information obtained from the previous GNSS measurement. Optionally, the start time for GNSS measurement may be determined based on one or more of: the end time for GNSS measurement, the duration of pausing GNSS measurement, the number of pauses in GNSS measurement, the DRX cycle, and the duration of executing GNSS measurement. The following describes with FIG. 7 as an example.

As shown in FIG. 7, the terminal device may measure GNSS using Manner 1, Manner 2, or Manner 3. In Manner 1, the terminal device measures GNSS in the continuous manner. In Manner 2, the terminal device measures GNSS in the time division manner and measures GNSS during part of the DRX active intervals. In Manner 3, the terminal device measures GNSS in the time division manner and does not measure GNSS during all DRX active intervals. Considering that the GNSS measurement process is required to completed before the expiration of the valid period of the second position information obtained historically, and that the duration of GNSS measurement meets the requirements, the start time for GNSS measurement may be later in a case that the terminal device measures GNSS using Manner 1, the start time for GNSS measurement may be earlier than Manner 1 in a case that the terminal device measures GNSS using Manner 2, and the start time for GNSS measurement may be earlier than Manner 2 in a case that the terminal device measures GNSS using Manner 3.

After the terminal device completes GNSS measurement and obtains the first position information, it may send the third indication information to the network device. The third indication information may indicate the completion of GNSS measurement. Optionally, the third indication information may further indicate the first position information.

In some embodiments, the terminal device may send the third indication information in a closest DRX active interval to the completion of GNSS measurement. The closest DRX active interval to the completion of GNSS measurement may include the closest DRX active interval to the completion of GNSS measurement before the completion of GNSS measurement, or the closest DRX active interval to the completion of GNSS measurement after the completion of GNSS measurement. For example, when the terminal device completes GNSS measurement, it may immediately report the third indication information to the network device if it is exactly in a DRX active interval. Alternatively, when the terminal device completes GNSS measurement, it may wait until a next closest DRX active interval to immediately report the third indication information to the network device if it is in a DRX inactive interval.

In some embodiments, the terminal device may start sending or triggering the third indication information in the DRX inactive interval. Before sending the third indication information, the terminal device may send a first resource request. The first resource request may be used to request a resource for transmitting the third indication information in a DRX inactive interval. For example, when the terminal device completes GNSS measurement, the terminal device may send the first resource request if it is in a DRX inactive interval, and may send the third indication information in the DRX inactive interval after obtaining the resource for transmitting the third indication information. The first resource request, for example, may include a scheduling request (SR).

The present disclosure does not limit the method for reporting the third indication information. For example, the third indication information may be reported through one or more of: the MAC CE, an RRC message, and a physical uplink control channel (PUCCH). The RRC message, for example, may include a UE assistance information (UAI) message.

In some embodiments, the terminal device and/or network device may start a first timer. The terminal device is required or should send third indication information during the operation of the first timer. If the terminal device has not sent the third indication information by the time the first timer expires, the state of the terminal device may switch to a non-connected state. For example, in response to the first timer expiring, the terminal device not sending the third indication information, and the second position information obtained from the historical GNSS measurement becoming invalid, the terminal device and/or network device may consider that the state of the terminal device is switched to an idle state.

In some embodiments, in response to the completion of GNSS measurement, the terminal device may start the first timer. For example, a starting time of the first timer may be a time when the GNSS measurement is completed. That is to say, the terminal device may immediately start the first timer after the completion of the GNSS measurement.

In some embodiments, the starting time of the first timer may be the time when the terminal device is able to begin sending data. For example, the starting time of the first timer may fall within the DRX activation interval. For example, the terminal device and/or network device may start the first timer at a start time of a first DRX activation interval following the completion of the GNSS measurement.

In some embodiments, the starting time of the first timer is equal to or earlier than the time when the second position information is invalid. For example, the terminal device and/or network device may start the first timer at the time when the second position information is invalid.

It should be noted that a duration of the first timer may satisfy one or both of: a protocol specification and a network device configuration. For example, the network device may configure the duration of the first timer through the RRC message.

It should be noted that after the successful reporting of the third indication information, the terminal device may use the first position information for communication. For example, the terminal device may determine an uplink transmission timing of advance based on the first position information. After the successful reporting of the third indication information, if the second position information has not yet become invalid, the terminal device may use either the first position information or the second position information for communication. In this case, whether the terminal device uses the first position information or second position information may be determined by the protocol specification, the network device configuration, or the terminal device's own decision. If the terminal device makes its own decision, it may notify the network device of the decision result or not notify the network device of the decision result.

It should be noted that the first position information obtained through GNSS measurement in above embodiments is merely an example. The terminal device may also obtain the first position information through other measurement methods, which is not limited in the present disclosure.

It should be noted that the term "transmitting and receiving data" as described above may refer to receiving and/or transmitting data.

The method embodiments of the present disclosure are described in detail above, and the apparatus embodiments of the present disclosure are described in detail below. It should be understood that descriptions of the method embodiments correspond to descriptions of the apparatus embodiments, and therefore, reference may be made to the foregoing method embodiments for parts that are not described in detail.

FIG. 8 is a schematic structural diagram of a terminal device 800 according to an embodiment of the present disclosure. The terminal device 800 may include a measurement unit 810.

The measurement unit 810 is configured to measure a GNSS in a time division manner to obtain the first position information of the terminal device.

In some embodiments, a time for measuring the GNSS and/or a time for pausing a GNSS measurement is determined based on a DRX cycle.

In some embodiments, the time for measuring the GNSS belongs to DRX inactive intervals or part of DRX active intervals; and/or, the time for pausing the GNSS measurement belongs to the DRX active intervals.

In some embodiments, the terminal device 800 is further configured to send first indication information. The first indication information is used to indicate whether the terminal device supports measuring the GNSS in the time division manner.

In some embodiments, the first indication information is carried in one or both of: terminal device capability information; and application layer capability reporting information.

In some embodiments, sending the first indication information includes: sending the first indication information during a registration process of the terminal device to a network; and/or, sending the first indication information in response to the terminal device establishing an RRC connection with a network device.

In some embodiments, the terminal device 800 is further configured to determine whether to measure the GNSS in the time division manner.

In some embodiments, determining whether to measure the GNSS in the time division manner includes: the terminal device determining to measure the GNSS in the time division manner or a continuous manner in a case that the terminal device supports measuring the GNSS in the time division manner.

In some embodiments, the terminal device 800 is further configured to send second indication information. The second indication information is used to indicate whether the terminal device measures the GNSS in the time division manner.

In some embodiments, sending the second indication information includes: sending the second indication information before measuring the GNSS in a case that the terminal device measures the GNSS in the continuous manner.

In some embodiments, sending the second indication information includes: sending the second indication information during a gap when the GNSS is paused in a case that the terminal device measures the GNSS in the time division manner.

In some embodiments, sending the second indication information includes: sending the second indication information before a first DRX active interval in which data is unable to be transmitted and received.

In some embodiments, the terminal device 800 is further configured to receive second indication information. The second indication information is used to indicate whether the terminal device measures the GNSS in the time division manner.

In some embodiments, receiving the second indication information includes: receiving the second indication information before measuring the GNSS.

In some embodiments, the second indication information is further configured to indicate one or both of: a DRX active interval in which data is unable to be transmitted and received; and a timing for completing the GNSS measurement.

In some embodiments, the DRX active interval in which data is unable to be transmitted and received is indicated by one or both of a bitmap and a first cycle.

In some embodiments, the timing for completing the GNSS measurement is indicated by an absolute time or an identifier of a time unit.

In some embodiments, the timing for completing the GNSS measurement is indicated by a reception time of a message related to the GNSS measurement.

In some embodiments, the terminal device 800 is further configured to determine a time to start measuring the GNSS based on whether the GNSS is measured in the time division manner.

In some embodiments, the terminal device 800 is further configured to send third indication information. The third indication information is used to indicate that the terminal device completes the GNSS measurement.

In some embodiments, sending the third indication information includes: sending the third indication information in a closest DRX active interval to completion of the GNSS measurement.

In some embodiments, the terminal device 800 is further configured to send a first resource request. The first resource request is used to request a resource for transmitting the third indication information in a DRX inactive interval.

In some embodiments, the terminal device 800 is further configured to start a first timer in response to completing the GNSS measurement. The terminal device is required to send the third indication information when the first timer does not expire.

In some embodiments, second position information is determined based on a historical GNSS measurement, and a starting time of the first timer is equal to or earlier than a time when the second position information is invalid.

In some embodiments, the second position information is determined based on the historical GNSS measurement, and a state of the terminal device switches to an idle state in response to the first timer expiring, the terminal device not sending the third indication information, and the second position information being invalid.

In some embodiments, the terminal device is an NB-IoT terminal.

FIG. 9 shows a network device 900 provided in an embodiment of the present disclosure. The network device 900 includes a receiving unit 910.

The receiving unit 910 is configured to receive first indication information sent by a terminal device. The first indication information is used to indicate whether the terminal device supports measuring a global navigation satellite system (GNSS) in a time division manner to obtain first position information of the terminal device.

In some embodiments, a time for measuring the GNSS and/or a time for pausing a GNSS measurement is determined based on a discontinuous reception (DRX) cycle.

In some embodiments, the time for measuring the GNSS belongs to DRX inactive intervals or part of DRX active intervals; and/or the time for pausing the GNSS measurement belongs to the DRX active intervals.

In some embodiments, the first indication information is carried in one or both of: terminal device capability information; and application layer capability reporting information.

In some embodiments, receiving the first indication information sent by the terminal device includes: receiving the first indication information sent by the terminal device during a registration process of the terminal device to a network; and/or receiving the first indication information sent by the terminal device in response to the terminal device establishing a radio resource control (RRC) connection with the network device.

In some embodiments, the network device 900 is further configured to determine whether the terminal device measures the GNSS in the time division manner.

In some embodiments, determining whether the terminal device measures the GNSS in the time division manner includes determining that the terminal device measures the GNSS in the time division manner or a continuous manner in a case that the terminal device supports measuring the GNSS in the time division manner.

In some embodiments, the network device 900 is further configured to send second indication information to the terminal device. The second indication information is used to indicate whether the terminal device measures the GNSS in the time division manner.

In some embodiments, sending the second indication information to the terminal device includes: sending the second indication information to the terminal device before the terminal device measures the GNSS.

In some embodiments, the network device 900 is further configured to receive second indication information sent by the terminal device. The second indication information is used to indicate whether the terminal device measures the GNSS in the time division manner.

In some embodiments, receiving the second indication information sent by the terminal device includes: receiving the second indication information sent by the terminal device before the terminal device measures the GNSS in a case that the terminal device measures the GNSS in a continuous manner.

In some embodiments, receiving the second indication information sent by the terminal device includes: receiving the second indication information sent by the terminal device during a gap when the terminal device pauses the GNSS in a case that the terminal device measures the GNSS in the time division manner.

In some embodiments, receiving the second indication information sent by the terminal device includes: receiving the second indication information sent by the terminal device before a first DRX active interval in which data is unable to be transmitted and received.

In some embodiments, the second indication information is further used to indicate one or both of: a DRX active interval in which data is unable to be transmitted and received; and a timing for completing the GNSS measurement.

In some embodiments, the DRX active interval in which data is unable to be transmitted and received is indicated by a bitmap and/or a first cycle.

In some embodiments, the timing for completing the GNSS measurement is indicated by an absolute time or an identifier of a time unit.

In some embodiments, the timing for completing the GNSS measurement is indicated by a reception time of a message related to the GNSS measurement.

In some embodiments, the network device 900 is further configured to receive third indication information sent by the terminal device. The third indication information is used to indicate that the terminal device completes the GNSS measurement.

In some embodiments, receiving the third indication information sent by the terminal device includes: receiving the third indication information in a closest DRX active interval to completion of the GNSS measurement.

In some embodiments, the network device 900 is further configured to receive a first resource request sent by the terminal device. The first resource request is used to request a resource for transmitting the third indication information in a DRX inactive interval.

In some embodiments, the network device 900 is further configured to start a first timer in response to completing the GNSS measurement. The network device is required to receive the third indication information sent by the terminal device in a case that the first timer does not expire.

In some embodiments, second position information is determined based on a historical GNSS measurement, and a starting time of the first timer is equal to or earlier than a time when the second position information is invalid.

In some embodiments, the second position information is determined based on a historical GNSS measurement, and a state of the terminal device switches to an idle state in response to the first timer expiring, the network device not receiving the third indication information, and the second position information being invalid.

In some embodiments, the terminal device is an NB-IoT terminal.

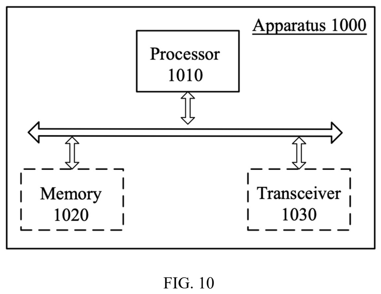

In optional embodiments, the receiving unit 910 may be a transceiver 1030, and the measurement unit 810 may be a processor 1010. The terminal device 800 may also include a transceiver 1030 and a memory 1020. The network device may also include a processor 1010 and a memory 1020, as specifically shown in FIG. 10.

FIG. 10 is a schematic structural diagram of an apparatus for communication according to an embodiment of the present disclosure. The dashed line in FIG. 10 indicates that the unit or module is optional. The apparatus 1000 may be configured to implement the method described in the foregoing method embodiments. The apparatus 1000 may be one or more of a chip, a terminal device, or a network device.

The apparatus 1000 may include one or more processors 1010, and the processor 1010 may support the apparatus 1000 to implement the method described in the foregoing method embodiments. The processor 1010 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1000 may further include one or more memories 1020 storing a program, and the program may be executed by the processor 1010 to cause the processor 1010 to perform the method described in the foregoing method embodiments. The memory 1020 may be independent of the processor 1010 or may be integrated into the processor 1010.

The apparatus 1000 may further include a transceiver 1030, and the processor 1010 may communicate with another device or chip via the transceiver 1030. For example, the processor 1010 may perform data transmission/reception with another device or chip via the transceiver 1030.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure, and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

The term "and/or" in the embodiments of the present disclosure is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In the embodiments of the present disclosure, the term "including" may refer to directly including or may be indirectly including. Optionally, the "including" mentioned in the embodiments of the present disclosure may be replaced with "indicating" or "used for determining". For example, A includes B, may be replaced with A indicates B, or A is used to determine B.

It should be understood that in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for communication, comprising:
measuring, by a terminal device, a global navigation satellite system, GNSS, in a time division manner to obtain first position information of the terminal device;
wherein one or both of a time for measuring the GNSS and a time for pausing a GNSS measurement is determined based on a discontinuous reception, DRX, cycle.

2. The method according to claim 1, wherein,
the time for measuring the GNSS belongs to DRX inactive intervals or part of DRX active intervals; and/or
the time for pausing the GNSS measurement belongs to the DRX active intervals.

3. The method according to claim 1 or claim 2, further comprising:
sending, by the terminal device, first indication information;
wherein the first indication information is used to indicate whether the terminal device supports measuring the GNSS in the time division manner.

4. The method according to claim 3, wherein the first indication information is carried in one or both of:
terminal device capability information; and
application layer capability reporting information.

5. The method according to claim 3 or claim 4, wherein the sending, by the terminal device, the first indication information includes:
sending, by the terminal device, the first indication information during a registration process of the terminal device to a network; and/or
sending, by the terminal device, the first indication information in response to the terminal device establishing a radio resource control, RRC, connection with a network device.

6. The method according to any one of claims 1 to 5, further comprising:
determining, by the terminal device, to measure the GNSS in the time division manner or a continuous manner in a case that the terminal device supports measuring the GNSS in the time division manner.

7. The method according to claim 6, further comprising:
sending, by the terminal device, second indication information;
wherein the second indication information is used to indicate whether the terminal device measures the GNSS in the time division manner.

8. The method according to claim 7, wherein the sending, by the terminal device, the second indication information includes:
sending, by the terminal device, the second indication information before measuring the GNSS in a case that the terminal device measures the GNSS in the continuous manner.

9. The method according to claim 7, wherein the sending, by the terminal device, the second indication information includes:
sending, by the terminal device, the second indication information during a gap when the GNSS is paused in a case that the terminal device measures the GNSS in the time division manner.

10. The method according to claim 9, wherein the sending, by the terminal device, the second indication information includes:
sending, by the terminal device, the second indication information before a first DRX active interval in which data is unable to be transmitted and received.

11. The method according to any one of claims 1 to 5, further comprising:
receiving, by the terminal device, second indication information;
wherein the second indication information is used to indicate whether the terminal device measures the GNSS in the time division manner.

12. The method according to claim 11, wherein the receiving, by the terminal device, the second indication information includes:
receiving, by the terminal device, the second indication information before measuring the GNSS.

13. The method according to any one of claims 7 to 12, wherein the second indication information is further used to indicate one or both of:
a DRX active interval in which data is unable to be transmitted and received; and
a timing for completing the GNSS measurement.

14. The method according to claim 13, wherein the DRX active interval in which data is unable to be transmitted and received is indicated by one or both of a bitmap and a first cycle.

15. The method according to claim 13 or claim 14, wherein the timing for completing the GNSS measurement is indicated by an absolute time or an identifier of a time unit.

16. The method according to claim 13 or claim 14, wherein the timing for completing the GNSS measurement is indicated by a reception time of a message related to the GNSS measurement.

17. The method according to any one of claims 1 to 16, further comprising:
determining, by the terminal device, a time to start measuring the GNSS based on whether the GNSS is measured in the time division manner.

18. The method according to any one of claims 1 to 17, further comprising:
sending, by the terminal device, third indication information;
wherein the third indication information is used to indicate that the terminal device completes the GNSS measurement.

19. The method according to claim 18, wherein the sending, by the terminal device, the third indication information includes:
sending, by the terminal device, the third indication information in a closest DRX active interval to completion of the GNSS measurement.

20. The method according to claim 18, further comprising:
sending, by the terminal device, a first resource request;
wherein the first resource request is used to request a resource for transmitting the third indication information in a DRX inactive interval.

21. The method according to any one of claims 18 to 20, further comprising:
starting a first timer in response to completing the GNSS measurement;
wherein the terminal device is required to send the third indication information when the first timer does not expire.

22. The method according to claim 21, wherein second position information is determined based on a historical GNSS measurement, and a starting time of the first timer is equal to or earlier than a time when the second position information is invalid.

23. The method according to any one of claims 1 to 22, wherein the terminal device is a narrow band internet of things, NB-IoT, terminal.

24. A method for communication, comprising:
receiving, by a network device, first indication information sent by a terminal device;
wherein the first indication information is used to indicate: whether the terminal device supports measuring a global navigation satellite system, GNSS, in a time division manner to obtain first position information of the terminal device, and one or both of a time for measuring the GNSS and a time for pausing a GNSS measurement is determined based on a discontinuous reception, DRX, cycle.

25. The method according to claim 24, wherein,
the time for measuring the GNSS belongs to DRX inactive intervals or part of DRX active intervals; and/or
the time for pausing the GNSS measurement belongs to the DRX active intervals.

26. The method according to claim 24 or claim 25, wherein the first indication information is carried in one or both of:
terminal device capability information; and
application layer capability reporting information.

27. The method according to any one of claims 24 to 26, wherein the receiving, by the network device, the first indication information sent by the terminal device includes:
receiving, by the network device, the first indication information sent by the terminal device during a registration process of the terminal device to a network; and/or
receiving, by the network device, the first indication information sent by the terminal device in response to the terminal device establishing a radio resource control, RRC, connection with the network device.

28. The method according to any one of claims 24 to 27, further comprising:
determining, by the network device, that the terminal device measures the GNSS in the time division manner or a continuous manner in a case that the terminal device supports measuring the GNSS in the time division manner.

29. The method according to claim 28, further comprising:
sending, by the network device, second indication information to the terminal device;
wherein the second indication information is used to indicate whether the terminal device measures the GNSS in the time division manner.

30. The method according to claim 29, wherein the sending, by the network device, the second indication information to the terminal device includes:
sending, by the network device, the second indication information to the terminal device before the terminal device measures the GNSS.

31. The method according to any one of claims 24 to 30, further comprising:
receiving, by the network device, second indication information sent by the terminal device;
wherein the second indication information is used to indicate whether the terminal device measures the GNSS in the time division manner.

32. The method according to claim 31, wherein the receiving, by the network device, the second indication information sent by the terminal device includes:
receiving, by the network device, the second indication information sent by the terminal device before the terminal device measures the GNSS in a case that the terminal device measures the GNSS in a continuous manner.

33. The method according to claim 32, wherein the receiving, by the network device, the second indication information sent by the terminal device includes:
receiving, by the network device, the second indication information sent by the terminal device during a gap when the terminal device pauses the GNSS in a case that the terminal device measures the GNSS in the time division manner.

34. The method according to claim 33, wherein the receiving, by the network device, the second indication information sent by the terminal device includes:
receiving, by the network device, the second indication information sent by the terminal device before a first DRX active interval in which data is unable to be transmitted and received.

35. The method according to any one of claims 29 to 34, wherein the second indication information is further used to indicate one or both of:
a DRX active interval in which data is unable to be transmitted and received; and
a timing for completing the GNSS measurement.

36. The method according to claim 35, wherein the DRX active interval in which data is unable to be transmitted and received is indicated by one or both of a bitmap and a first cycle.

37. The method according to claim 35 or claim 36, wherein the timing for completing the GNSS measurement is indicated by an absolute time or an identifier of a time unit.

38. The method according to claim 35 or claim 36, wherein the timing for completing the GNSS measurement is indicated by a reception time of a message related to the GNSS measurement.

39. The method according to any one of claims 24 to 38, further comprising:
receiving, by the network device, third indication information sent by the terminal device;
wherein the third indication information is used to indicate that the terminal device completes the GNSS measurement.

40. The method according to claim 39, wherein the receiving, by the network device, the third indication information sent by the terminal device includes:
receiving, by the network device, the third indication information in a closest DRX active interval to completion of the GNSS measurement.

41. The method according to claim 39, further comprising:
receiving, by the network device, a first resource request sent by the terminal device;
wherein the first resource request is used to request a resource for transmitting the third indication information in a DRX inactive interval.

42. The method according to any one of claims 24 to 41, wherein the terminal device is a narrow band internet of things, NB-IoT, terminal.

43. A terminal device, comprising:
a measurement unit, configured to measure a global navigation satellite system, GNSS, in a time division manner to obtain first position information of the terminal device;
wherein one or both of a time for measuring the GNSS and a time for pausing a GNSS measurement is determined based on a discontinuous reception, DRX, cycle.

44. The terminal device according to claim 43, wherein,
the time for measuring the GNSS belongs to DRX inactive intervals or part of DRX active intervals; and/or
the time for pausing the GNSS measurement belongs to the DRX active intervals.

45. The terminal device according to claim 43 or claim 44, wherein the terminal device is further configured to:
send first indication information;
wherein the first indication information is used to indicate whether the terminal device supports measuring the GNSS in the time division manner.

46. The terminal device according to claim 45, wherein the first indication information is carried in one or both of:
terminal device capability information; and
application layer capability reporting information.

47. The terminal device according to claim 45 or claim 46, wherein sending the first indication information includes:
sending the first indication information during a registration process of the terminal device to a network; and/or
sending the first indication information in response to the terminal device establishing a radio resource control, RRC, connection with a network device.

48. The terminal device according to any one of claims 43 to 47, wherein the terminal device is further configured to:
determine, by the terminal device, to measure the GNSS in the time division manner or a continuous manner in a case that the terminal device supports measuring the GNSS in the time division manner.

49. The terminal device according to claim 48, wherein the terminal device is further configured to:
send second indication information;
wherein the second indication information is used to indicate whether the terminal device measures the GNSS in the time division manner.

50. The terminal device according to claim 49, wherein sending the second indication information includes:
sending the second indication information before measuring the GNSS in a case that the terminal device measures the GNSS in the continuous manner.

51. The terminal device according to claim 49, wherein sending the second indication information includes:
sending the second indication information during a gap when the GNSS is paused in a case that the terminal device measures the GNSS in the time division manner.

52. The terminal device according to claim 51, wherein the sending the second indication information includes:
sending the second indication information before a first DRX active interval in which data is unable to be transmitted and received.

53. The terminal device according to any one of claims 43 to 47, wherein the terminal device is further configured to:
receive second indication information;
wherein the second indication information is used to indicate whether the terminal device measures the GNSS in the time division manner.

54. The terminal device according to claim 53, wherein receiving the second indication information includes:
receiving the second indication information before measuring the GNSS.

55. The terminal device according to any one of claims 49 to 54, wherein the second indication information is further used to indicate one or both of:
a DRX active interval in which data is unable to be transmitted and received; and
a timing for completing the GNSS measurement.

56. The terminal device according to claim 55, wherein the DRX active interval in which data is unable to be transmitted and received is indicated by one or both of a bitmap and a first cycle.

57. The terminal device according to claim 55 or claim 56, wherein the timing for completing the GNSS measurement is indicated by an absolute time or an identifier of a time unit.

58. The terminal device according to claim 55 or claim 56, wherein the timing for completing the GNSS measurement is indicated by a reception time of a message related to the GNSS measurement.

59. The terminal device according to any one of claims 43 to 58, wherein the terminal device is further configured to:
determine a time to start measuring the GNSS based on whether the GNSS is measured in the time division manner.

60. The terminal device according to any one of claims 43 to 59, wherein the terminal device is further configured to:
send third indication information;
wherein the third indication information is used to indicate that the terminal device completes the GNSS measurement.

61. The terminal device according to claim 60, wherein sending the third indication information includes:
sending the third indication information in a closest DRX active interval to completion of the GNSS measurement.

62. The terminal device according to claim 60, wherein the terminal device is further configured to:
send a first resource request;
wherein the first resource request is used to request a resource for transmitting the third indication information in a DRX inactive interval.

63. The terminal device according to any one of claims 60 to 62, wherein the terminal device is further configured to:
start a first timer in response to completing the GNSS measurement;
wherein the terminal device is required to send the third indication information when the first timer does not expire.

64. The terminal device according to claim 63, wherein second position information is determined based on a historical GNSS measurement, and a starting time of the first timer is equal to or earlier than a time when the second position information is invalid.

65. The terminal device according to any one of claims 43 to 64, wherein the terminal device is a narrow band internet of things, NB-IoT, terminal.

66. A network device, comprising:
a receiving unit, configured to receive first indication information sent by a terminal device;
wherein the first indication information is used to indicate: whether the terminal device supports measuring a global navigation satellite system, GNSS, in a time division manner to obtain first position information of the terminal device, and one or both of a time for measuring the GNSS and a time for pausing a GNSS measurement is determined based on a discontinuous reception, DRX, cycle.

67. The network device according to claim 66, wherein,
the time for measuring the GNSS belongs to DRX inactive intervals or part of DRX active intervals; and/or
the time for pausing the GNSS measurement belongs to the DRX active intervals.

68. The network device according to claim 66 or claim 67, wherein the first indication information is carried in one or both of:
terminal device capability information; and
application layer capability reporting information.

69. The network device according to any one of claims 66 to 68, wherein receiving the first indication information sent by the terminal device includes:
receiving the first indication information sent by the terminal device during a registration process of the terminal device to a network; and/or
receiving the first indication information sent by the terminal device in response to the terminal device establishing a radio resource control, RRC, connection with the network device.

70. The network device according to any one of claims 66 to 69, wherein the network device is further configured to:
determine that the terminal device measures the GNSS in the time division manner or a continuous manner in a case that the terminal device supports measuring the GNSS in the time division manner.

71. The network device according to claim 70, wherein the network device is further configured to:
send second indication information to the terminal device;
wherein the second indication information is used to indicate whether the terminal device measures the GNSS in the time division manner.

72. The network device according to claim 71, wherein sending the second indication information to the terminal device includes:
sending the second indication information to the terminal device before the terminal device measures the GNSS.

73. The network device according to any one of claims 66 to 72, wherein the network device is further configured to:
receive second indication information sent by the terminal device;
wherein the second indication information is used to indicate whether the terminal device measures the GNSS in the time division manner.

74. The network device according to claim 73, wherein receiving the second indication information sent by the terminal device includes:
receiving the second indication information sent by the terminal device before the terminal device measures the GNSS in a case that the terminal device measures the GNSS in a continuous manner.

75. The network device according to claim 74, wherein the receiving the second indication information sent by the terminal device includes:
receiving the second indication information sent by the terminal device during a gap when the terminal device pauses the GNSS in a case that the terminal device measures the GNSS in the time division manner.

76. The network device according to claim 75, wherein the receiving the second indication information sent by the terminal device includes:
receiving the second indication information sent by the terminal device before a first DRX active interval in which data is unable to be transmitted and received.

77. The network device according to any one of claims 71 to 76, wherein the second indication information is further used to indicate one or both of:
a DRX active interval in which data is unable to be transmitted and received; and
a timing for completing the GNSS measurement.

78. The network device according to claim 77, wherein the DRX active interval in which data is unable to be transmitted and received is indicated by one or both of a bitmap and a first cycle.

79. The network device according to claim 77 or claim 78, wherein the timing for completing the GNSS measurement is indicated by an absolute time or an identifier of a time unit.

80. The network device according to claim 77 or claim 78, wherein the timing for completing the GNSS measurement is indicated by a reception time of a message related to the GNSS measurement.

81. The network device according to any one of claims 66 to 80, wherein the network device is further configured to:
receive third indication information sent by the terminal device;
wherein the third indication information is used to indicate that the terminal device completes the GNSS measurement.

82. The network device according to claim 81, wherein receiving the third indication information sent by the terminal device includes:
receiving the third indication information in a closest DRX active interval to completion of the GNSS measurement.

83. The network device according to claim 81, wherein the network device is further configured to:
receive a first resource request sent by the terminal device;
wherein the first resource request is used to request a resource for transmitting the third indication information in a DRX inactive interval.

84. The network device according to any one of claims 66 to 83, wherein the terminal device is a narrow band internet of things, NB-IoT, terminal.

85. A terminal device, comprising a memory and a processor, wherein the memory is configured to store a program, and the processor is configured to invoke the program in the memory to cause the terminal device to perform the method according to any one of claims 1 to 23.

86. A network device, comprising a memory and a processor, wherein the memory is configured to store a program, and the processor is configured to invoke the program in the memory to cause the network device to perform the method according to any one of claims 24 to 42.

87. An apparatus, comprising a processor, wherein the processor is configured to invoke a program from a memory to cause the apparatus to perform the method according to any one of claims 1 to 42.

88. A chip, comprising a processor, wherein the processor is configured to invoke a program from a memory to cause a device installed with the chip to perform the method according to any one of claims 1 to 42.

89. A computer-readable storage medium storing a program, wherein the program causes a computer to perform the method according to any one of claims 1 to 42.

90. A computer program product, comprising a program, wherein the program causes a computer to perform the method according to any one of claims 1 to 42.

91. A computer program, wherein the computer program causes a computer to perform the method according to any one of claims 1 to 42.
